# EUROPEAN PATENT APPLICATION

(11) **EP 4 803 481 A1**
(43) Date of publication of application: **09.09.2026**
(21) Application number: 25715151.4
(22) Date of filing: 06.02.2025
(51) Int. Cl.: C01B 25/37, C01B 25/45, H01M 4/1397, H01M 4/58, H01M 10/0525, B01J 4/02, B01J 4/00, B01J 19/00

(54) **IRON PHOSPHATE AND PREPARATION METHOD THEREFOR, PRODUCTION DEVICE, AND LITHIUM IRON PHOSPHATE POSITIVE ELECTRODE MATERIAL**

(30) Priority: 26.01.2025 CN 202510124936
(71) Applicant: Hubei Hongrun High-Tech New Materials Co., Ltd., Ezhou, Hubei 436070 (CN)
(72) Inventor: XU, Shanwan, Ezhou, Hubei 436070 (CN); FANG, Yuanyuan, Ezhou, Hubei 436070 (CN); GUO, Miyan, Ezhou, Hubei 436070 (CN); HUA, Junhong, Ezhou, Hubei 436070 (CN); XIA, Qingbo, Ezhou, Hubei 436070 (CN); XU, Peng, Ezhou, Hubei 436070 (CN); HUANG, Tianyu, Ezhou, Hubei 436070 (CN)
(74) Representative: Novagraaf Technologies
(86) International application number: PCT/CN2025/076048
(87) International publication number: WO 2026/156930

(57) **Abstract**

The present application provides an iron phosphate, a preparation method and production device thereof, and a lithium iron phosphate cathode material, which relates to the field of iron phosphate technology. The present application includes spherical secondary particles, the secondary particles are composed of primary particles, the primary particles have an octahedral structure, and an average side length of the primary particles is 200 nm-800 nm. **In** the present application, the provided iron phosphate has a high tap density, and the lithium iron phosphate cathode material made from this iron phosphate has good electrochemical performance.

## Description

### Technical Field

The present application relates to the field of iron phosphate technology, specifically to an iron phosphate, a preparation method and production device thereof, and a lithium iron phosphate cathode material.

### Background

With the development of new energy technology, a lithium-ion battery has been widely used in various fields such as a mobile phone, a laptop, an electric vehicle, etc.; and a cathode material is a key component in the lithium-ion battery, which determines performance indicators such as energy density, cycle life, charging and discharging rate, and safety of the battery. In the 1990s, lithium iron phosphate was reported as a cathode material for a lithium-ion battery, with high theoretical specific capacity and stable electrochemical performance, and is currently one of the most widely used cathode material for a lithium-ion battery.

Generally, solid-state reaction method is used for preparing lithium iron phosphate, which involves mixing iron phosphate and a lithium source in a certain proportion, and then performing solid-state reaction at high temperature to generate lithium iron phosphate. At present, lithium iron phosphate is generally prepared using iron phosphate with primary particles in the form of flakes and secondary particles in the form of spheres. However, this morphology of iron phosphate often contains or introduces more impurities, and a tap density of the iron phosphate is low, resulting in poor electrochemical performance of the produced lithium iron phosphate.

### Summary

In view of the technical problems existing in the background technology, the present application provides an iron phosphate, a preparation method and production device thereof, and a lithium iron phosphate cathode material, aiming to solve the problems of high impurities and low tap density in iron phosphate.

In a first aspect, an embodiment of the present application provides an iron phosphate, the iron phosphate includes spherical secondary particles, the secondary particles are composed of primary particles, the primary particles have an octahedral structure, and an average side length of the primary particles is 200 nm-800 nm.

In this embodiment, by regulating the structure of iron phosphate, a tap density of the iron phosphate can be significantly improved, and impurities in the iron phosphate with this morphology is reduced, which helps to enhance the electrochemical performance of a lithium iron phosphate cathode material obtained from this iron phosphate.

In some embodiments, a tap density of the iron phosphate is 1.15 g/cm³-1.6 g/cm³.

In these embodiments, controlling the tap density of the iron phosphate within the above-mentioned range is beneficial for preparing lithium iron phosphate with good electrochemical performance.

In some embodiments, a particle size distribution coefficient of the iron phosphate is 0.7-1.3.

In these embodiments, by regulating the particle size distribution coefficient, the uniformity of iron phosphate is relatively high and the processing performance is great, which helps to improve the cycling performance and energy density of a lithium iron phosphate cathode material obtained from this iron phosphate.

In some embodiments, a crystal structure of the iron phosphate is an orthorhombic crystal form.

In these embodiments, the provided iron phosphate has a higher density and a higher tap density.

In some embodiments, an average side length of the primary particles is 320 nm-450 nm.

In these embodiments, by controlling the average side length of the primary particles, the obtained iron phosphate can have both high tap density and high purity.

In a second aspect, an embodiment of the present application provides a preparation method of the iron phosphate, including the following steps:
mixing a ferrous salt solution, a phosphate-containing solution, and an oxidant solution to obtain an oxidation reaction product;
performing first rinsing and slurrying treatment on the oxidation reaction product in sequence to obtain a slurried material;
performing first aging treatment on some of the slurried material to obtain a first aged material;
mixing the first aged material with the remaining slurried material and performing second aging treatment to obtain a second aged material; and
performing second rinsing, drying, and sintering on the second aged material in sequence to obtain the iron phosphate.

In this embodiment, the preparation of the oxidation reaction product by mixing the ferrous salt solution, the phosphate-containing solution, and the oxidant solution helps to increase the specific surface area of the oxidation reaction product, increase the number of active sites, and thus improve the preparation efficiency; after the first rinsing, impurities can be removed, and then slurrying treatment is performed to promote the uniform dispersion of particles, which is conducive to pipeline transportation and achieves continuous production; afterwards, the first aging treatment of some of the slurried material can obtain iron phosphate crystal seeds, allowing the solid substance in the remaining slurried material to grow on the basis of the iron phosphate crystal seeds with high growth order, resulting in the primary particles of the obtained iron phosphate with an octahedral structure and high tap density.

In some embodiments, a concentration of ferrous ions in the ferrous salt solution is 0.5 mol/L-1.5 mol/L; a concentration of phosphate ions in the phosphate-containing solution is 1.6 mol/L-2.5 mol/L, and a pH value of the phosphate-containing solution is 6.8-7.2; and a concentration of oxidant in the oxidant solution is 0.5 mol/L-1 mol/L.

In these embodiments, the pH value can be adjusted by adding alkali such as sodium hydroxide or ammonia water to the phosphate-containing solution. It can be understood that by adjusting the concentration and pH value of each reaction raw material, it is beneficial to promote the rapid generation of the iron phosphate and facilitate the formation of uniform nuclei, which has a better promoting effect on the growth of subsequent crystals. In addition, the concentration of the solution within the above-mentioned range also helps to reduce the adsorption of impurity ions by the product and improve the purity of the iron phosphate.

In some embodiments, an acid solution is used for slurrying treatment; and furthermore, the acid solution is a phosphoric acid solution with a phosphoric acid concentration of 0.1 mol/L-0.5 mol/L.

In these embodiments, the slurrying treatment with the acid solution can provide an acidic environment for the nucleation and growth of the iron phosphate, which is beneficial for regulating the growth direction of an iron phosphate crystal and promoting the formation of the target structure, namely a crystal structure of an orthorhombic crystal form.

In some embodiments, a temperature of the first aging is 85°C-100°C, and after changing color, the slurried material is aged for 5 min-15 min to obtain the first aged material; and a temperature of the second aging is 85°C-100°C, and a time is 80 min-150 min.

In these embodiments, by controlling the conditions of the first aging, the formation of the iron phosphate crystal seeds can be promoted, making the structure of the iron phosphate crystal seeds more regular and uniform, and the span of particle size of the iron phosphate crystal seeds narrower. Meanwhile, controlling the conditions of the second aging can help promote the formation of iron phosphate particles and improve production efficiency.

In some embodiments, a temperature of the drying is 90°C-110°C, a temperature of the sintering is 550°C-650°C, and a time of the sintering is 1 h-3 h.

In these embodiments, controlling the drying temperature helps to improve the drying efficiency and enhance the production efficiency of the iron phosphate. Meanwhile, controlling the sintering temperature helps to form an iron phosphate with an orthorhombic crystal form, thereby improving its tap density.

In some embodiments, a molar ratio of the ferrous ions in the ferrous salt solution, the phosphate ions in the phosphate-containing solution, and the oxidant in the oxidant solution is 1:(0.95-1.05):(0.6-0.8).

In these embodiments, by controlling the molar ratio of the ferrous ions, the phosphate ions, and the oxidant, an iron to phosphorus ratio of the product can be made closer to the theoretical iron phosphate (FePO₄), thereby improving the purity of the product.

In some embodiments, the first rinsing is carried out by leaching with water until a conductivity of the rinsing water after leaching is less than 5 ms/cm; and the second rinsing is carried out by leaching with water until a conductivity of the rinsing water after leaching is <500 µs/cm.

In these embodiments, by controlling the endpoints of the first and second rinsing, it is possible to effectively reduce impurities in the product while ensuring production efficiency.

In some embodiments, a time of the slurrying treatment is 30 min-60 min; and a solid content of the slurried material is 10wt%-20wt%.

In these embodiments, by controlling the slurrying treatment time, it can be ensured that the iron phosphate particles are fully dispersed in the slurried material; controlling the solid content can ensure that the slurried material has moderate viscosity and flowability, so that the particles can change their microstructure under the action of the acid solution, improve electrochemical performance and processing performance.

In some embodiments, a ferrous salt in the ferrous salt solution is at least one of ferrous sulfate, ferrous chloride, and ferrous nitrate; a phosphate in the phosphate-containing solution is derived from at least one of ammonium dihydrogen phosphate, diammonium hydrogen phosphate, disodium hydrogen phosphate, sodium dihydrogen phosphate, and phosphoric acid; and an oxidant in the oxidant solution is at least one of hydrogen peroxide, ammonium persulfate, and sodium persulfate.

In these embodiments, by controlling the types of the ferrous salt and the oxidant, as well as the source of the phosphate, it is possible to ensure efficient chemical reaction, improved product quality, and relatively low cost.

In a third aspect, an embodiment of the present application provides a production device of the iron phosphate, including the following units:
a feeding unit for providing an oxidation reaction raw material, wherein the oxidation reaction raw material comprises a ferrous salt solution, a phosphate-containing solution, and an oxidant solution;
a reaction unit for performing an oxidation reaction to obtain an oxidation reaction product;
a first rinsing unit for rinsing the oxidation reaction product to obtain a first rinsed product;
a slurrying unit for performing slurrying treatment on the first rinsed product to obtain a slurried material;
an aging unit for performing first aging treatment and second aging treatment in sequence on the slurried material to obtain a second aged material;
a second rinsing unit for rinsing the second aged material to obtain a second rinsed product;
a post-treatment unit comprising a drying subunit and a sintering subunit, wherein the drying subunit is used for drying the second rinsed product to obtain a dried material, and the sintering subunit is used for sintering the dried material to obtain iron phosphate; and the iron phosphate is the iron phosphate of the first aspect of the present application or the iron phosphate prepared by the preparation method of the second aspect of the present application.

In this embodiment, the continuous and automated preparation process of the iron phosphate is achieved by integrating units such as feeding, reaction, rinsing, slurrying, aging, and post-treatment, which can reduce manual intervention and improve the safety and stability of the production process.

In some embodiments, the feeding unit includes multiple storage tanks and multiple first discharge pipes arranged at the bottom of the storage tanks, and the oxidation reaction raw material is stored in the multiple storage tanks; the reaction unit includes a reaction kettle and multiple first feed pipes arranged at the bottom of the reaction kettle, as well as a first overflow port arranged at the top of the reaction kettle, the first feed pipe is connected to the first discharge pipe of the feeding unit, and the oxidation reaction raw material undergoes oxidation reaction in the reaction kettle to obtain the oxidation reaction product; the first rinsing unit includes a first belt filter and a first spray thrower arranged on one side of the first belt filter, the oxidation reaction product overflows from the first overflow port on the upper part of the reaction kettle in the reaction unit to a feeding end of the first belt filter in the first rinsing unit, and is rinsed by the first spray thrower to obtain the first rinsed product; the slurrying unit includes a slurrying reaction kettle, a chute arranged on the slurrying reaction kettle, and a second discharge pipe, the chute is connected to a discharge end of the belt filter in the first rinsing unit, the first rinsed product enters the slurrying reaction kettle through the chute and undergoes slurrying treatment in the slurrying reaction kettle to obtain the slurried material; the aging unit includes an aging reaction kettle and a second feed pipe arranged at the bottom of the aging reaction kettle, as well as a second overflow port arranged on the upper part of the aging reaction kettle, the second feed pipe is connected to the second discharge pipe of the slurrying unit, and the slurried material undergoes the first aging treatment and the second aging treatment in sequence in the aging reaction kettle to obtain the second aged material; the second rinsing unit includes a second belt filter and a second spray thrower arranged on one side of the second belt filter, the second aged material overflows to a feeding end of the second belt filter through the second overflow port on the upper part of the aging reaction kettle in the aging unit, and is rinsed by the second spray thrower to obtain the second rinsed product; and the drying and sintering unit includes the drying subunit and the sintering subunit, wherein the drying subunit includes a drying oven, and the sintering subunit includes a calcination furnace, the second rinsed product is dried through the drying oven to obtain the dried material, and then the dried material is sintered through the calcination furnace to obtain the iron phosphate.

In these embodiments, by refining the specific structure of each unit, production efficiency and product quality have been effectively improved, production cost and environmental impact have been reduced, providing favorable support for the large-scale production of the lithium iron phosphate cathode material.

In some embodiments, the oxidation reaction raw material flows into the reaction kettle in the continuous reaction unit at a flow rate of 1/20 to 1/5 times the volume of the reaction kettle in the continuous reaction unit per minute; and the slurried material is added to the aging reaction kettle of the aging unit at a flow rate of 1/150 to 1/90 times the volume of the aging reaction kettle per minute.

In these embodiments, by controlling the feed flow rate of the oxidation reaction raw material and the slurried material within the above-mentioned range, the equilibrium state of the reaction system can be maintained, the stability and controllability of the reaction process can be improved, and which is beneficial for enhancing the purity and the yield of the iron phosphate.

In a fourth aspect, an embodiment of the present application provides a lithium iron phosphate cathode material.

In this embodiment, the lithium iron phosphate cathode material includes the above-mentioned iron phosphate, thus exhibiting excellent electrochemical performance.

The foregoing description is merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### Brief Description of the Drawings

To describe the technical solution of the present application more clearly, the following briefly describes the accompanying drawings used in the present application. Apparently, the accompanying drawings in the following descriptions show merely some embodiments of the present application, and those of ordinary skill in the art may still derive other drawings from the accompanying drawings without creative efforts.
FIG. 1 shows a schematic diagram of the production device of iron phosphate in the embodiments of the present application;
FIG. 2 shows an XRD pattern of the second aged material in Example 1;
FIG. 3 shows an XRD pattern of the iron phosphate in Example 1;
FIG. 4 shows an XRD pattern of the aged reaction product in Comparative Example 1;
FIG. 5 shows an XRD pattern of the iron phosphate in Comparative Example 1;
FIG. 6 shows an XRD pattern of the iron phosphate in Example 9;
FIG. 7 shows an SEM image of the iron phosphate in Example 1;
FIG. 8 shows an SEM image of the iron phosphate in Example 2; and
FIG. 9 shows an SEM image of the iron phosphate in Comparative Example 1;

Annotations on accompanying drawings: 10. the feeding unit; 20. the reaction unit; 30. the first rinsing unit; 40. the slurrying unit; 50. the aging unit; 60. the second rinsing unit; 70. the post-treatment unit.

### Detailed Description of the Embodiments

The examples of the technical solutions of the present application will be described in detail below in conjunction with the accompanying drawings. The following examples are only intended to provide a clearer explanation of the technical solutions of the present application, and therefore they are only used as examples and rather than as limitations to the scope of protection of the present application.

At present, an iron phosphate used to prepare a lithium iron phosphate cathode material generally has a secondary particle structure, with primary particles in the form of flakes and secondary particles in the form of spheres. The iron phosphate with this morphology usually has more impurities and low tap density, which leads to poor electrochemical performance of a lithium iron phosphate cathode material obtained from this iron phosphate.

In order to solve the technical problems of high impurities and low tap density in the iron phosphate, the present application provides an iron phosphate, a preparation method and production device thereof, and a lithium iron phosphate cathode material. By regulating the structure of the iron phosphate, the technical effect of reducing the impurities and improving the tap density of the iron phosphate can be achieved, thereby improving the electrochemical performance of the lithium iron phosphate cathode material obtained from this iron phosphate.

In a first aspect, an embodiment of the present application provides an iron phosphate, the iron phosphate includes spherical secondary particles, the secondary particles are composed of primary particles, the primary particles have an octahedral structure, and an average side length of the primary particles is 200 nm-800 nm.

In the present application, compared to amorphous or irregularly shaped particles, an octahedral structure has a lower specific surface area. The decrease in specific surface area means that during the synthesis process, the chance of adsorbing impurity ions on the particle surface is reduced, thereby reducing the content of the impurities in the iron phosphate. At the same time, by controlling the side length of the primary particles between 200 nm-800 nm, the contact time between the particles and the impurities in a solution during the synthesis process can be reduced, thereby reducing the adsorption and retention of impurity elements. Furthermore, the secondary particles being spherical can improve the flowability and filtration performance of a material, and compared to a flake structure, they have lower resistance and higher washing efficiency during filtration and washing processes, thus enabling more effective removal of the impurities. In addition, during the formation of the secondary particles, the ordered arrangement and specific size range of the octahedral primary particles help to form a denser structure, thereby increasing the tap density. The spherical secondary particles have a lower porosity, and their morphology allows the particles to adhere more tightly when stacked, reducing the gaps between the particles, thus providing higher mass within the same volume, i.e., higher tap density.

Furthermore, in some embodiments, a tap density of the iron phosphate is 1.15 g/cm³-1.6 g/cm³.

In the present application, the tap density of the iron phosphate is within the above-mentioned range, which is beneficial for improving the tap density of lithium iron phosphate obtained from the iron phosphate, thereby improving the electrochemical performance of the lithium iron phosphate.

Furthermore, in some embodiments, a particle size distribution coefficient of the iron phosphate is 0.7-1.3.

In the present application, the particle size distribution coefficient is (D90-D10)/D50, and the closer its value is to 1, the higher the uniformity of the iron phosphate. By controlling the particle size distribution coefficient within the above-mentioned range, on the one hand, the uniformity of the material is high, which is conducive to mixing and compaction; on the other hand, it is also beneficial to increase the contact area between the lithium iron phosphate cathode material obtained from this iron phosphate and an electrolyte, and shorten the diffusion path of lithium ions.

Furthermore, in some embodiments, a crystal structure of the iron phosphate is an orthorhombic crystal form.

In the present application, an iron phosphate with an orthorhombic crystal form has high structural and thermal stability, and it provides a pathway for the lithium ions to diffuse along specific lattice directions during charging and discharging processes, which facilitates the rapid movement of the lithium ions. In addition, the purity and density of iron phosphate with an orthorhombic crystal form structure are relatively high, which plays a significant role in improving the electrochemical performance of the lithium iron phosphate cathode material.

Furthermore, in some embodiments, an average side length of the primary particles is 320 nm-450 nm.

In the present application, controlling the average side length of the primary particles within the above-mentioned range results in weaker adsorption capacity for impurity ions during the growth process, which helps to reduce the impurity content in the iron phosphate.

In a second aspect, an embodiment of the present application provides a preparation method of the iron phosphate, including the following steps:
mixing a ferrous salt solution, a phosphate-containing solution, and an oxidant solution to obtain an oxidation reaction product;
performing first rinsing and slurrying treatment on the oxidation reaction product in sequence to obtain a slurried material;
performing first aging treatment on some of the slurried material to obtain a first aged material;
mixing the first aged material with the remaining slurried material and performing second aging treatment to obtain a second aged material; and
performing second rinsing, drying, and sintering on the second aged material in sequence to obtain the iron phosphate.

In the present application, the first rinsing can reduce the impurity content during the synthesis process, remove unreacted raw materials, and improve the purity of subsequent slurried materials. Meanwhile, the slurrying treatment further optimizes the dispersibility of the material, which is beneficial for the formation of iron phosphate crystal seeds during the first aging process; mixing the first aged material with the remaining slurried material for the second aging can promote the growth of the iron phosphate from amorphous to regular and orderly direction, which is beneficial for forming an iron phosphate with the primary particles having an octahedral structure and the secondary particles being spherical; performing the second rinsing after the second aging can further reduce the impurity content in a product; and an iron to phosphorus ratio of the produced iron phosphate is close to 1:1, with high purity and stability, wherein the iron to phosphorus ratio is the molar ratio of iron to phosphorus. It should be noted that the aforementioned some of the slurried material refers to the slurried material that accounts for 8%-15% of the total amount of the slurried material, and the remaining slurried material refers to the slurried material that accounts for 85%-92% of the total amount of the slurried material.

Furthermore, in some embodiments, a concentration of ferrous ions in the ferrous salt solution is 0.5 mol/L-1.5 mol/L; a concentration of phosphate ions in the phosphate-containing solution is 1.6 mol/L-2.5 mol/L, and a pH value of the phosphate-containing solution is 6.8-7.2; and a concentration of an oxidant in the oxidant solution is 0.5 mol/L-1 mol/L.

In the present application, limiting the concentration of each solution can ensure sufficient contact and reaction of reactants in the oxidation reaction, thereby optimizing the reaction rate, enabling the reaction to proceed quickly and smoothly, facilitating the formation of iron phosphate with a desired structure, and reducing the waste of raw materials, saving production cost. In addition, controlling the concentration of the phosphate ions in the phosphate-containing solution within the above-mentioned range is beneficial for promoting the formation of the primary particles with the octahedral structure, thereby improving the tap density of the iron phosphate.

Furthermore, in some embodiments, an acid solution is used for slurrying treatment; and the preferred acid solution is a phosphoric acid solution with a phosphoric acid concentration of 0.1 mol/L-0.5 mol/L.

In the present application, an acid solution is used, as the aforementioned phosphoric acid solution can have a positive effect on the microstructure of the iron phosphate through the slurrying treatment, a phosphoric acid solution within this concentration range can promote the formation of the primary particles and the optimization of the secondary particles, improving the consistency of the tap density and the morphology of the finished iron phosphate; and using the phosphoric acid solution for slurrying will not introduce other impurities.

Furthermore, in some embodiments, a temperature of the first aging is 85°C-100°C, and after changing color, the slurried material is aged for 5 min-15 min to obtain the first aged material; and a temperature of the second aging is 85°C-100°C, and a time is 80 min-150 min.

In the present application, controlling the conditions of the first aging can promote the initial shape formation of iron phosphate particles and control the particle size distribution, resulting in higher uniformity. In addition, controlling the conditions of the second aging can further stabilize the crystal structure of the iron phosphate and improve the cycling performance of the lithium iron phosphate cathode material obtained from this iron phosphate.

Furthermore, in some embodiments, a temperature of the drying is 90°C-110°C, a temperature of the sintering is 550°C-650°C, and a time of the sintering is 1 h-3 h.

In the present application, controlling the drying temperature can effectively remove moisture from the iron phosphate slurried material, avoiding crystal structure damage or phase transition caused by drying; afterwards, sintering at 550°C-650°C can ensure low thermal stress during the sintering process, which will not have a significant impact on the mechanical properties of the iron phosphate, and at the same time, it can further improve the crystal structure of the iron phosphate, enhance its density and stability.

Furthermore, in some embodiments, a molar ratio of the ferrous ions in the ferrous salt solution, the phosphate ions in the phosphate-containing solution, and the oxidant in the oxidant solution is 1:(0.95-1.05):(0.6-0.8).

In the present application, controlling the molar ratio of each substance can ensure a more complete and controllable chemical reaction between phosphorus, iron, and oxidant, which is beneficial for forming iron phosphate with an iron to phosphorus ratio closer to the theoretical value and improving the purity of the material.

Furthermore, in some embodiments, the first rinsing is carried out by leaching with water until a conductivity of a rinsing water after leaching is less than 5 ms/cm; and the second rinsing is carried out by leaching with water until a conductivity of a rinsing water after leaching is <500 µs/cm.

In the present application, a conductivity of the rinsing water after the first rinsing is controlled to be less than 5 ms/cm, allowing for deep rinsing of the iron phosphate and effectively reducing the impurity content in the prepared iron phosphate.

Furthermore, in some embodiments, a time of the slurrying treatment is 30 min-60 min; and a solid content of the slurried material is 10 wt%-20 wt%.

In the present application, setting the time of slurrying to 30 min-60 min can ensure that the material is fully dispersed and uniformly mixed in the solution, which is beneficial for the uniform growth of the iron phosphate crystals and thus obtaining iron phosphate with uniform morphology. In addition, controlling the solid content of the slurried material can improve its flowability and dispersibility, enhance subsequent treatment efficiency, and shorten aging time.

Furthermore, in some embodiments, ferrous salt in the ferrous salt solution is at least one of ferrous sulfate, ferrous chloride, and ferrous nitrate; phosphate in the phosphate-containing solution is derived from at least one of ammonium dihydrogen phosphate, diammonium hydrogen phosphate, disodium hydrogen phosphate, sodium dihydrogen phosphate, and phosphoric acid; and oxidant in the oxidant solution is at least one of hydrogen peroxide, ammonium persulfate, and sodium persulfate.

In the present application, controlling the types of the ferrous salt and the oxidant, as well as the source of the phosphate, can ensure efficient chemical reactions under different conditions, while reducing the generation of by-products and improving the yield and purity of the target product, iron phosphate.

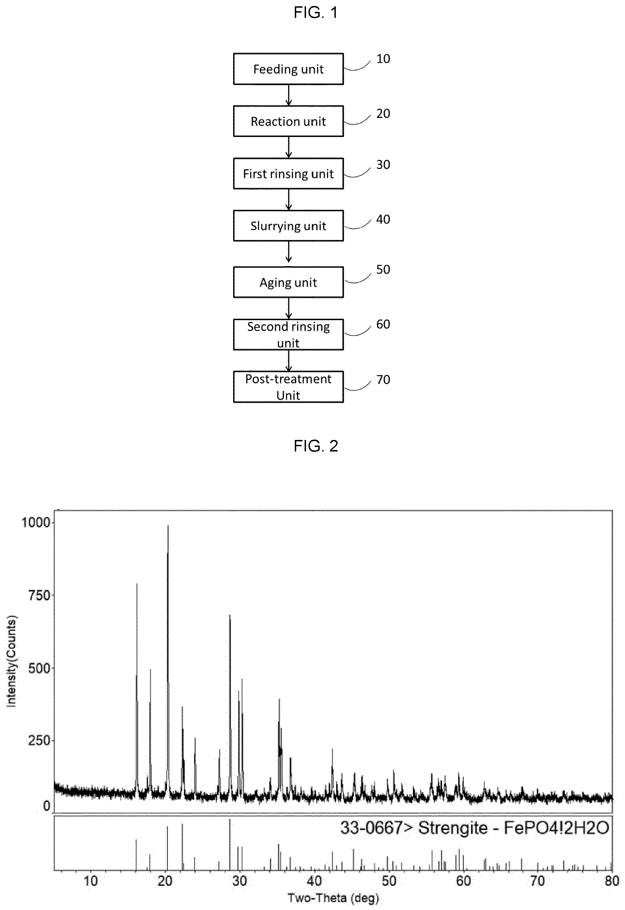

In a third aspect, an embodiment of the present application provides a production device of the iron phosphate. The schematic diagram of the production device is shown in FIG. 1, which includes the following units:
a feeding unit 10 for providing an oxidation reaction raw material, wherein the oxidation reaction raw material comprises a ferrous salt solution, a phosphate-containing solution, and an oxidant solution;
a reaction unit 20 for performing a continuous oxidation reaction to obtain an oxidation reaction product;
a first rinsing unit 30 for rinsing the oxidation reaction product to obtain a first rinsed product;
a slurrying unit 40 for performing slurrying treatment on the first rinsed product to obtain a slurried material;
an aging unit 50 for performing first aging treatment and second aging treatment in sequence on the slurried material to obtain a second aged material;
a second rinsing unit 60 for rinsing the second aged material to obtain a second rinsed product; and
a post-treatment unit 70 comprising a drying subunit and a sintering subunit, wherein the drying subunit is used for drying the second rinsed product to obtain a dried material, and the sintering subunit is used for sintering the dried material to obtain iron phosphate.

In the present application, the design of the feeding unit and reaction unit avoids the non-production time of waiting for feeding and discharging in traditional intermittent production, enabling seamless integration of the reaction and treatment processes, greatly improving production efficiency and equipment utilization. The arrangement of the first and second rinsing units can effectively remove impurities and unreacted raw materials from the reaction product, improving the purity of a product; and the continuous operation of the slurrying and aging units is beneficial for controlling the formation of the microstructure of the iron phosphate, thereby obtaining an iron phosphate with high tap density and ideal iron to phosphorus ratio. The continuous design of the entire production device facilitates integrated automation control, reduces manual intervention, lowers the labor intensity of operators, ensures the safety and stability of the production process, and facilitates large-scale production.

In some embodiments, the feeding unit 10 includes multiple storage tanks and multiple first discharge pipes arranged at the bottom of the storage tanks, and the oxidation reaction raw material is stored in the multiple storage tanks; the reaction unit 20 includes a reaction kettle and multiple first feed pipes arranged at the bottom of the reaction kettle, as well as a first overflow port arranged at the top of the reaction kettle, the first feed pipe is connected to the first discharge pipe of the feeding unit 10, and the oxidation reaction raw material undergoes oxidation reaction in the reaction kettle to obtain the oxidation reaction product; the first rinsing unit 30 includes a first belt filter and a first spray thrower arranged on one side of the first belt filter, the oxidation reaction product overflows from the first overflow port on the upper part of the reaction kettle in the reaction unit 20 to a feeding end of the first belt filter in the first rinsing unit 30, and is rinsed by the first spray thrower to obtain the first rinsed product; the slurrying unit 40 includes a slurrying reaction kettle, a chute arranged on the slurrying reaction kettle, and a second discharge pipe, the chute is connected to a discharge end of the belt filter in the first rinsing unit 30, the first rinsed product enters the slurrying reaction kettle through the chute and undergoes slurrying treatment in the slurrying reaction kettle to obtain the slurried material; the aging unit 50 includes an aging reaction kettle and a second feed pipe arranged at the bottom of the aging reaction kettle, as well as a second overflow port arranged on the upper part of the aging reaction kettle, the second feed pipe is connected to the second discharge pipe of the slurrying unit 40, and the slurried material undergoes the first aging treatment and the second aging treatment in sequence in the aging reaction kettle to obtain the second aged material; the second rinsing unit 60 includes a second belt filter and a second spray thrower arranged on one side of the second belt filter, the second aged material overflows to a feeding end of the second belt filter through the second overflow port on the upper part of the aging reaction kettle in the aging unit 50, and is rinsed by the second spray thrower to obtain the second rinsed product; and the drying and sintering unit 70 includes the drying subunit and the sintering subunit, wherein the drying subunit includes a drying oven, and the sintering subunit includes a calcination furnace, the second rinsed product is dried through the drying oven to obtain the dried material, and then the dried material is sintered through the calcination furnace to obtain the iron phosphate.

In the present application, the design of the multiple storage tanks and the first discharge pipes of the feeding unit 10 can accurately control the flow rates of the ferrous salt solution, the phosphate-containing solution, and the oxidant solution, ensuring that these three oxidation reaction raw materials are continuously and stably supplied to the reaction unit according to the preset ratio, thereby improving reaction efficiency and raw material utilization. The reaction kettle in the reaction unit 20 is connected to the feeding unit through multiple first feed pipes at the bottom, which enables the simultaneous addition of multiple streams of the oxidation reaction materials, facilitating the thorough mixing and rapid reaction of the oxidation reaction materials in the reaction kettle. Meanwhile, the design of the first overflow port ensures that the oxidation reaction product can overflow to the subsequent rinsing unit, avoiding the waiting time for the material transfer in traditional intermittent production and improving the continuity and efficiency of the entire production process. The first rinsing unit 30 and the second rinsing unit 60, respectively, achieve continuous automatic washing of the oxidation reaction product and the second aged material through the first belt filter and the second belt filter, combined with the use of the spray thrower.

Furthermore, in the present application, the chute in the slurrying unit 40 is connected to the discharge end of the belt filter in the first rinsing unit 30, and the first rinsed product can enter the slurrying reaction kettle through the chute to obtain the slurried material after the slurrying treatment; the second feed pipe of the aging unit 50 is connected to the second discharge pipe of the slurrying unit 40, some of the slurried material is performed the first aging treatment in the aging reaction kettle to prepare the iron phosphate crystal seeds, afterwards, the remaining slurried material introduced and the iron phosphate crystal are combined to achieve the second aging treatment to obtain the second aged material. Some of the slurried material used for the first aging treatment refers to the slurried material that accounts for 8%-15% of the total amount of the slurried material, and the remaining slurried material used for the second aging treatment refers to the slurried material that accounts for 85%-92% of the total amount of the slurried material. In the present application, effective coordination between the slurrying unit 40 and the aging unit can be achieved, thereby improving the continuity and efficiency of the entire production process.

Furthermore, in the present application, the production device of the iron phosphate also includes the drying and sintering unit 70, wherein the drying and sintering unit 70 includes the drying subunit and the sintering subunit, which can be used for the drying and sintering treatment of the second rinsed product to obtain the iron phosphate. Therefore, in the present application, the highly integrated and continuous process design effectively improves the production efficiency and product quality of the iron phosphate, reduces production cost and environmental impact, and provides strong support for the large-scale production and technological research and development of the lithium iron phosphate cathode material.

Furthermore, in some embodiments, the oxidation reaction raw material flows into the reaction vessel in the continuous reaction unit at a flow rate of 1/20 to 1/5 times the volume of the reaction vessel in the continuous reaction unit per minute; and the slurried material is added to the aging reaction kettle of the aging unit at a flow rate of 1/150 to 1/90 times the volume of the aging reaction kettle per minute.

In the present application, by setting the flow rates of the oxidation reaction raw material and the slurried material to a specific ratio, stable control of the reaction process can be achieved, particle size distribution and microstructure can be optimized, production efficiency and equipment utilization can be improved, energy consumption and cost can be reduced, and continuous optimization and automation management of process parameters can be promoted.

In a fourth aspect, an embodiment of the present application provides a lithium iron phosphate cathode material, which is prepared from the iron phosphate in the above-mentioned embodiments or the iron phosphate prepared by the preparation method in the above-mentioned embodiments. Therefore, the lithium iron phosphate cathode material has good electrochemical performance.

The following are some specific examples. It should be noted that the examples described below are exemplary and are intended to explain the present application and are not to be construed as limiting the present application. If no specific technology or conditions are indicated in the examples, the technology or conditions described in the literature in the art or the product specification shall be followed. The reagents or instruments used without specifying the manufacturer are conventional products that can be obtained through commercial purchase.

### I. Preparation method

### Example 1

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/10 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/120 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Example 2

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.05 and a molar concentration of 2.5 mol/L of phosphorus element; and hydrogen peroxide and pure water were configured into an oxidant solution with a concentration of 0.75 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1.05:0.7 of ferrous ions, phosphate ions, and oxidant, and the total amount of solution flowing into the reaction kettle per minute was 1/15 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.1 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 90°C, until the slurried material changed from yellow to pink, and the slurried material was held for 10 min for a total of 15 min to obtain iron phosphate crystal seeds (i.e. a first aged material mentioned above).
S6. a temperature of the system was maintained at 90°C, and a remaining slurried material was added to the aging reaction kettle at a flow rate of 1/90 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 95°C to obtain a dried product, then the dried product was sintered in a calcination furnace at 600°C for 1.5 h to obtain the iron phosphate.

### Example 3

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/20 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/150 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Example 4

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/5 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/100 of the reaction kettle volume per minute to obtain an aged reaction product.
S7. the aged reaction product was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Example 5

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/20 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/160 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Example 6

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.05 and a molar concentration of 2.5 mol/L of phosphorus element; and hydrogen peroxide and pure water were configured into an oxidant solution with a concentration of 0.75 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1.05:0.7 of ferrous ions, phosphate ions, and oxidant, and the total amount of solution flowing into the reaction kettle per minute was 1/15 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.1 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 90°C, until the slurried material changed from yellow to pink, and the slurried material was held for 10 min for a total of 15 min to obtain iron phosphate crystal seeds (i.e. a first aged material mentioned above).
S6. a temperature of the system was maintained at 90°C, and a remaining slurried material was added to the aging reaction kettle at a flow rate of 1/80 of the reaction kettle volume per minute to obtain a second aged material.
S7. the aged reaction product was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 95°C to obtain a dried product, then the dried product was sintered in a calcination furnace at 600°C for 2 h to obtain the iron phosphate.

### Example 7

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/25 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/150 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Example 8

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/3 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/100 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Example 9

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/10 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/120 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 540°C for 2 h to obtain the iron phosphate.

### Example 10

One embodiment of the present disclosure was an iron phosphate, and a preparation method of the iron phosphate in this embodiment was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 1.5 mol/L of phosphorus element; and hydrogen peroxide and pure water were configured into an oxidant solution with a concentration of 0.8 mol/L H₂O₂.
S2. the stirring of a reaction kettle was turned on, and the ferrous sulfate solution, the phosphate solution, and the oxidant solution divided into three streams were fed in from the bottom of a reaction kettle of a reaction unit, and naturally overflowed from a first overflow port at the top of the reaction kettle into a first belt filter of a first rinsing unit after filling the reaction kettle; the ferrous sulfate solution, the phosphate solution, and the oxidant solution were introduced into the reaction kettle in a molar ratio of 1:1:0.7 of ferrous ions, phosphate ions, and oxidant, and the total amount of solution flowing into the reaction kettle per minute was 1/10 of the reaction kettle volume.
S3. a material on the first belt filter was sprayed and rinsed by a first spray thrower, rinsed by water, and after a conductivity of a rinsing water was less than 5 ms/cm, a first rinsed product was transported from a discharge end of the first belt filter to a chute on a slurrying reaction kettle.
S4. a phosphoric acid solution with a phosphoric acid concentration of 0.2 mol/L was added into the slurrying reaction kettle, the first rinsed product was added from the chute on the slurrying reaction kettle to the slurrying reaction kettle, a slurried material was obtained after 30 min of slurrying treatment, and a solid content of the slurried material was controlled at 15%.
S5. through a second feed pipe in a slurrying unit, 10% of the total amount of the slurried material was transported to an aging reaction kettle, it was fed until a second overflow port, stirring and heating were started, the heating temperature was 95°C, until the slurried material changed from yellow to pink, and the slurried material was held for 10 min for a total of 15 min to obtain iron phosphate crystal seeds (i.e. a first aged material mentioned above).
S6. a temperature of the system was maintained at 95°C, and a remaining slurried material was added to the aging reaction kettle at a flow rate of 1/120 of the reaction kettle volume per minute to obtain a second aged material.
S7. the second aged material was naturally overflowed into a second belt filter through the second overflow port of the aging reaction kettle, and was sprayed and rinsed with water by a second spray thrower until a conductivity of the rinsing water after rinsing was <500 µs/cm to obtain a second rinsed product.
S8. the second rinsed product was transported to a drying oven and dried at 98°C to obtain a dried product, then the dried product was sintered in a calcination furnace at 600°C for 2 h to obtain the iron phosphate.

### Comparative Example 1

An iron phosphate, and a preparation method of the iron phosphate was as follows:
S1. ferrous sulfate was prepared into a ferrous sulfate solution with a molar concentration of 1 mol/L of ferrous ions; ammonium dihydrogen phosphate, phosphoric acid, ammonia water, and water were prepared into a phosphate solution with a pH value of 7.0 and a molar concentration of 2 mol/L of phosphorus element; and hydrogen peroxide and pure water were configured into an oxidant solution with a concentration of 0.8 mol/L H₂O₂.
S2. the stirring of a reaction kettle was turned on, the ferrous sulfate solution was firstly introduced from the bottom of the reaction kettle, and then the phosphate solution and oxidant solution were divided into two streams and introduced from the bottom of the reaction kettle, wherein the ferrous sulfate solution, the phosphate solution, and the oxidant solution were controlled to be introduced into the reaction kettle in a molar ratio of 1:1:0.7 of ferrous ions, phosphate ions, and oxidant to obtain an oxidation reaction product.
S3. the oxidation reaction product was rinsed using a plate and frame filter to obtain a filter cake by rinsing with water until a conductivity of the rinsing water was <5 ms/cm.
S4. a phosphoric acid solution with a phosphoric acid concentration of 0.2 mol/L was added into the slurrying reaction kettle, the filter cake was added to the slurrying reaction kettle, a slurried material was obtained after 30 min of slurrying treatment, and a solid content of the slurried material was controlled at 15%.
S5. the slurried material was transported to an aging reaction kettle, it was fed until a second overflow port, stirring and heating were started, the heating temperature was 95°C, until the slurried material changed from yellow to pink, and the slurried material was held for 90 min for a total of 120 min to obtain an aging reaction product.
S6. the aging product was filtered using the plate and frame filter, rinsed with water until a conductivity of the rinsing water was <500 µs/cm to obtain a rinsed product.
S7. the rinsed product was transported to a drying oven and dried at 98°C to obtain a dried product, and the dried product was sintered in a calcination furnace at 600°C to obtain the iron phosphate.

### 2. Performance testing

(1) Average side length of primary particles: the average side length was calculated by statistically analyzing the side length of the primary particles using SEM.
(2) Tap density: referring to GB/T 5162-2006 for testing, the testing method was as follows: a powder was loaded into a sample cylinder and vibrated it up and down, and when the gap between the particles reached its limit and the volume of the powder no longer decreased, the volume and weight data of the vibrated powder was input into a computer to automatically calculate the tap density of the powder; and during the vibration process, the vibration amplitude was 3.0+0.1 mm, the vibration frequency was 250±15 times/min, and the vibration number was 5000 times.
(3) Iron to phosphorus ratio: referring to the national standard HG/T 4701-2021, the iron to phosphorus ratio was calculated according to the following formula: M=(w1/w2)×0.5545, wherein w1 was the mass content of Fe, and w2 was the mass content of P.
(4) Impurity element content (mass content: ppm): the impurity element content was determined through EDS energy spectrogram.
(5) Morphology and structure: the morphology of iron phosphate was observed using a scanning electron microscope, and the structure of the iron phosphate was tested using an XRD diffractometer.
(6) Yield: a molar amount of iron element added to a reaction kettle within 1 h was taken as I_{Fe}, and a molar amount of iron element in a rinsing water within 1 h was taken as R_{Fe}. Yield=(1-I_{Fe}/R_{Fe})×100%.

**Table 1**

| Items | Iron to phospho rus ratio | D₀ (µm) | D₁₀ (µm) | D₅₀ (µm) | D₉₀ (µm) | D₉₉ (µm) | D₁₀₀ (µm) | Particle size distribution coefficient | Tap density (g/cm³) | Average side length of primary particles (nm) |
|---|---|---|---|---|---|---|---|---|---|---|
| Example 1 | 0.9986 | 2.421 | 3.903 | 5.58 | 7.908 | 9.676 | 11.188 | 0.72 | 1.35 | 375 |
| Example 2 | 0.9952 | 2.225 | 3.554 | 5.417 | 8.259 | 10.805 | 12.779 | 0.87 | 1.31 | 390 |
| Example 3 | 0.9962 | 2.364 | 3.762 | 5.56 | 8.132 | 10.523 | 11.781 | 0.79 | 1.33 | 410 |
| Example 4 | 0.9973 | 2.443 | 3.773 | 5.64 | 8.096 | 9.626 | 11.569 | 0.77 | 1.36 | 420 |
| Example 5 | 0.9963 | 2.359 | 3.253 | 10.325 | 15.36 | 28.92 | 30.746 | 1.17 | 1.55 | 700 |
| Example 6 | 0.9920 | 1.924 | 3.225 | 5.147 | 7.963 | 9.114 | 10.662 | 0.92 | 1.30 | 260 |
| Example 7 | 0.9953 | 2.523 | 4.123 | 7.213 | 12.33 | 15.34 | 16.42 | 1.14 | 1.50 | 670 |
| Example 8 | 0.9963 | 2.128 | 3.336 | 4.978 | 9.53 | 15.26 | 15.33 | 1.24 | 1.30 | 320 |
| Example 9 | 0.9925 | 2.431 | 3.911 | 5.632 | 7.935 | 8.992 | 11.231 | 0.71 | 1.15 | 350 |
| Example 10 | 0.9917 | 2.332 | 3.884 | 5.471 | 7.847 | 9.524 | 11.249 | 0.72 | 1.31 | 560 |
| Comparative Example 1 | 0.9679 | 2.233 | 27.947 | 104.248 | 169.47 | 210.853 | 3.65 | 1.36 | 0.95 | Irregular shape |

**Table 2**

| Sample category | | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|---|
| Sulfur/ppm | | 11.96 | 14.66 | 11.32 | 9.56 | 43.25 | 15.22 | 15.66 | 8.67 | 76.21 | 6.32 | 83.49 |
| Impurity element s/ppm | Al | 19.92 | 13.73 | 14.63 | 22.27 | 25.3 | 23.66 | 18.21 | 19.95 | 22.4 | 18.08 | 14.98 |
| | Ca | 10.2 | 2.81 | 1.63 | 2.08 | 3.96 | 11.18 | 12.5 | 1.88 | 1.19 | 7.21 | 0.71 |
| | Cd | 0.38 | 0.65 | 0.58 | 0.26 | 0.42 | 0.99 | 0 | 0.12 | 0.53 | 0.14 | 0.07 |
| | Co | 1.01 | 1.17 | 1.2 | 1.2 | 0.66 | 0.86 | 1.01 | 0.55 | 1.05 | 0.97 | 0.53 |
| | Cr | 6.85 | 7.67 | 3.74 | 3.39 | 3.4 | 1.52 | 4.01 | 4.4 | 6.67 | 1.84 | 2.56 |
| | Cu | 0 | 0.03 | 0 | 0 | 0 | 0 | 0 | 0 | 0 | 0 | 0 |
| | K | 4.66 | 0 | 30.25 | 25.24 | 17.5 | 17.65 | 22.84 | 8.38 | 11.08 | 7.63 | 56.69 |
| | Mg | 9.33 | 10.15 | 19.51 | 17.61 | 11.7 | 10.66 | 13.34 | 9.89 | 10.84 | 8.9 | 7.89 |
| | Mn | 8.06 | 15.58 | 17.43 | 14.57 | 15.43 | 18.85 | 13.43 | 10.68 | 16.48 | 14.4 | 10.96 |
| | Na | 3.44 | 3.42 | 1.4 | 3.55 | 5.38 | 6.97 | 6.76 | 5.29 | 11.56 | 9.64 | 0.38 |
| | Ni | 5.78 | 3.79 | 1.51 | 2.64 | 2 | 3.13 | 2.75 | 3.59 | 3.02 | 2.91 | 2.9 |
| | Pb | 16.89 | 9.93 | 11.66 | 13.9 | 8.76 | 13.25 | 11.27 | 14.23 | 14.25 | 10.6 | 18.55 |
| | Ti | 2.36 | 1.6 | 1.18 | 1.51 | 3.71 | 0.74 | 0.72 | 0.91 | 1.59 | 0.75 | 2.39 |
| | Zn | 11.34 | 0 | 2.09 | 0.75 | 2 | 0 | 2.03 | 3.55 | 1.25 | 3.81 | 1.81 |
| Yield/% | | 99.6 | 99.5 | 99.7 | 99.4 | 99.8 | 99.2 | 99.8 | 99 | 99.6 | 99.6 | 99.6 |

From the above-mentioned test results, it could be seen that the iron phosphate obtained in Examples 1-10 of the present application had a high tap density, higher than 1.1 g/cm³; secondly, the impurity content was relatively low, all below 180 ppm; and in addition, the iron to phosphorus ratio was above 0.99, which had good comprehensive performance and was suitable for the preparation of a high-performance lithium iron phosphate cathode material.

Furthermore, comparing the test results of Examples 1 to 10, it could be found that when the crystal structure of the iron phosphate was orthorhombic crystal, its impurity content was relatively low; and in addition, when the average side length of the primary particles of iron phosphate was 320 nm-450 nm, the impurity content of the iron phosphate could be further reduced, which was beneficial for improving the electrochemical performance of a lithium iron phosphate cathode material obtained from this iron phosphate.

In addition, the yield of the iron phosphate prepared by the method described in the present application could reach over 99%, which means great preparation efficiency, and when the oxidation reaction raw material flowed into the reaction kettle in the continuous reaction unit at a flow rate of 1/20 to 1/5 times the volume of the reaction kettle in the continuous reaction unit per minute, the slurried material was added to the aging reaction kettle of the aging unit at a flow rate of 1/150 to 1/90 times the volume of the aging reaction kettle per minute, the yield of the iron phosphate was higher.

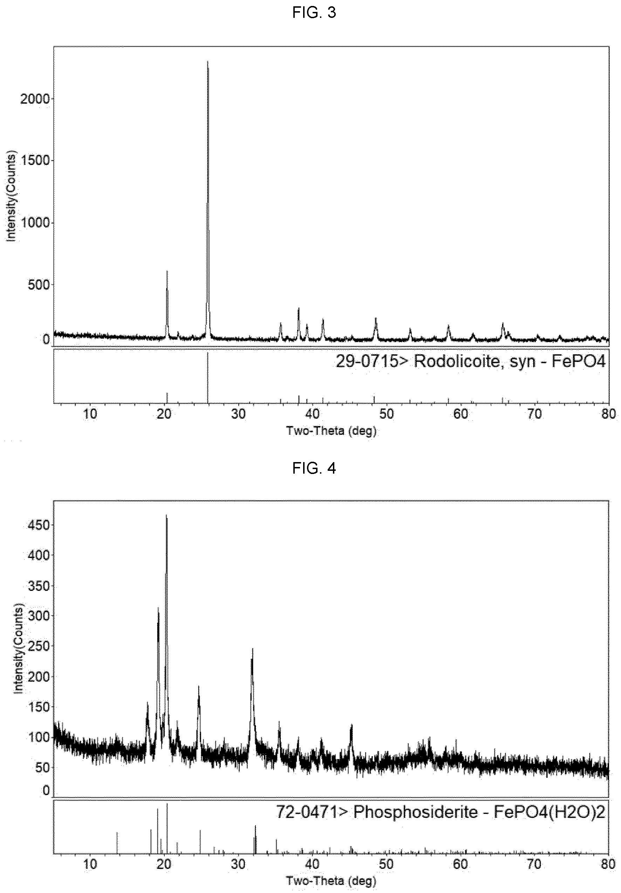

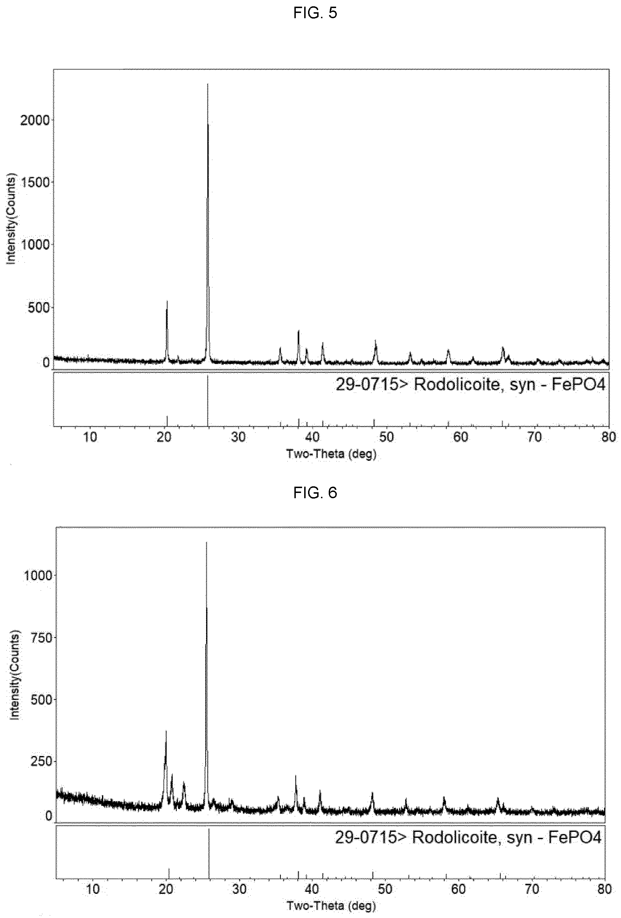

FIG. 2 showed an XRD pattern of the second aged material in Example 1, and FIG. 3 showed an XRD pattern of the iron phosphate in Example 1; FIG. 4 showed an XRD pattern of the aging reaction product in Comparative Example 1, and FIG. 5 showed an XRD pattern of the iron phosphate in Comparative Example 1; comparing FIGs. 2-3 and FIGs. 4-5, it could be seen that there was a certain difference between the crystal structures of the second aged material in Example 1 and the aged reaction product in Comparative Example 1. Moreover, the crystallinity of the second aged material in Example 1 was high, while that of the aging reaction product in Comparative Example 1 was low. Although the structure of the final product iron phosphate obtained from both was the same, the aging reaction product would affect the purity and tap density of the final product iron phosphate.

FIG. 6 showed an XRD pattern of the iron phosphate in Example 9, which had low crystallinity and many impurity peaks, resulting in a low tap density of the iron phosphate, and its effect on improving the tap density of the lithium iron phosphate cathode material was relatively small.

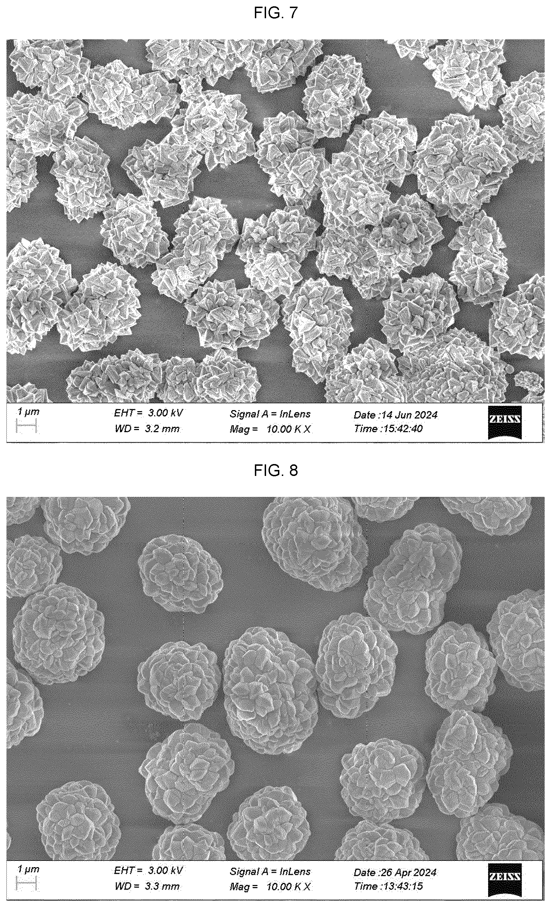

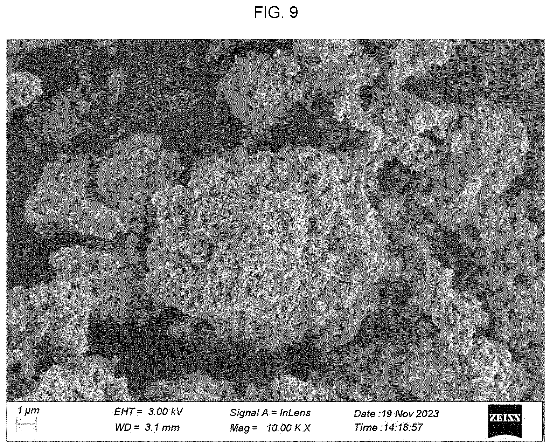

FIGs. 7-8 showed SEM images of the iron phosphate in Examples 1-2, and FIG. 9 showed an SEM image of the iron phosphate in Comparative Example 1. As could be seen from the figures, the iron phosphate in Examples 1-2 had a spherical secondary particle structure composed of the primary particles, which were octahedral in structure. In Comparative Example 1, the structure of the iron phosphate was loose and irregular. Through the morphological characterization results above, it could be seen that the iron phosphate in Examples 1-2 had a more compact structure, which helped to improve the comprehensive performance of the lithium iron phosphate cathode material obtained from the iron phosphate.

It is to be noted that the present application is not limited to the aforementioned embodiments. The above-mentioned embodiments are merely examples, and embodiments having substantially the same constructions and the same effects as the technical idea within the scope of the technical solutions of the present application are all included in the technical scope of the present application. In addition, without departing from the essence of the present application, various modifications made to the embodiments that can be conceived by those skilled in the art, and other manners constructed by combining some of the constituent elements in the embodiments are also included in the scope of the present application.

## Claims

1. An iron phosphate, wherein the iron phosphate comprises spherical secondary particles, the secondary particles are composed of primary particles, the primary particles have an octahedral structure, and an average side length of the primary particles is 200 nm-800 nm.

2. The iron phosphate according to claim 1, wherein a tap density of the iron phosphate is 1.15 g/cm³-1.6 g/cm³.

3. The iron phosphate according to claim 1 or 2, wherein the iron phosphate comprises at least one of the following features:
(1) a particle size distribution coefficient of the iron phosphate is 0.7-1.3;
(2) a crystal structure of the iron phosphate is an orthorhombic crystal form; and
(3) an average side length of the primary particles is 320 nm-450 nm.

4. A preparation method of the iron phosphate according to any one of claims 1 to 3, wherein the preparation method comprises the following steps:
mixing a ferrous salt solution, a phosphate-containing solution, and an oxidant solution to obtain an oxidation reaction product;
performing first rinsing and slurrying treatment on the oxidation reaction product in sequence to obtain a slurried material;
performing first aging treatment on some of the slurried material to obtain a first aged material;
mixing the first aged material with the remaining slurried material and performing second aging treatment to obtain a second aged material; and
performing second rinsing, drying, and sintering on the second aged material in sequence to obtain the iron phosphate.

5. The preparation method of the iron phosphate according to claim 4, wherein the preparation method comprises at least one of the following features:
(1) a concentration of ferrous ions in the ferrous salt solution is 0.5 mol/L-1.5 mol/L;
(2) a concentration of phosphate ions in the phosphate-containing solution is 1.6 mol/L-2.5 mol/L, and a pH value of the phosphate-containing solution is 6.8-7.2;
(3) a concentration of an oxidant in the oxidant solution is 0.5 mol/L-1 mol/L;
(4) an acid solution is used for performing the slurrying treatment to obtain the slurried material;
(5) a temperature of the first aging is 85°C-100°C, and after changing color, the slurried material is aged for 5 min-15 min to obtain the first aged material;
(6) a temperature of the second aging is 85°C-100°C, and a time is 80 min-150 min; and
(7) a temperature of the drying is 90°C-110°C, a temperature of the sintering is 550°C-650°C, and a time of the sintering is 1 h-3 h.

6. The preparation method of the iron phosphate according to claim 5, wherein the preparation method comprises at least one of the following features:
(1) a molar ratio of the ferrous ions in the ferrous salt solution, the phosphate ions in the phosphate-containing solution, and the oxidant in the oxidant solution is 1:(0.95-1.05):(0.6-0.8);
(2) the first rinsing is carried out by leaching with water until a conductivity of a rinsing water after leaching is <5 ms/cm;
(3) the acid solution is a phosphoric acid solution with a phosphoric acid concentration of 0.1 mol/L-0.5 mol/L;
(4) a time of the slurrying treatment is 30 min-60 min;
(5) a solid content of the slurried material is 10 wt%-20 wt%;
(6) a ferrous salt in the ferrous salt solution is at least one of ferrous sulfate, ferrous chloride, and ferrous nitrate;
(7) a phosphate in the phosphate-containing solution is derived from at least one of ammonium dihydrogen phosphate, diammonium hydrogen phosphate, disodium hydrogen phosphate, sodium dihydrogen phosphate, and phosphoric acid;
(8) the oxidant in the oxidant solution is at least one of hydrogen peroxide, ammonium persulfate, and sodium persulfate; and
(9) the second rinsing is carried out by leaching with water until a conductivity of a rinsing water after leaching is <500 µs/cm.

7. A production device of the iron phosphate, wherein the production device comprises the following units:
a feeding unit for providing an oxidation reaction raw material, wherein the oxidation reaction raw material comprises a ferrous salt solution, a phosphate-containing solution, and an oxidant solution;
a reaction unit for performing an oxidation reaction to obtain an oxidation reaction product;
a first rinsing unit for rinsing the oxidation reaction product to obtain a first rinsed product;
a slurrying unit for performing slurrying treatment on the first rinsed product to obtain a slurried material;
an aging unit for performing first aging treatment and second aging treatment in sequence on the slurried material to obtain a second aged material;
a second rinsing unit for rinsing the second aged material to obtain a second rinsed product; and
a post-treatment unit comprising a drying subunit and a sintering subunit, wherein the drying subunit is used for drying the second rinsed product to obtain a dried material, and the sintering subunit is used for sintering the dried material to obtain iron phosphate; and
the iron phosphate is the iron phosphate according to any one of claims 1 to 3, or the iron phosphate prepared by the preparation method of the iron phosphate according to any one of claims 4 to 6.

8. The production device of the iron phosphate according to claim 7, wherein the feeding unit comprises multiple storage tanks and multiple first discharge pipes arranged at the bottom of the storage tanks, and the oxidation reaction raw material is stored in the multiple storage tanks;
the reaction unit comprises a reaction kettle and multiple first feed pipes arranged at the bottom of the reaction kettle, as well as a first overflow port arranged at the top of the reaction kettle, the first feed pipe is connected to the first discharge pipe of the feeding unit, and the oxidation reaction raw material undergoes oxidation reaction in the reaction kettle to obtain the oxidation reaction product;
the first rinsing unit comprises a first belt filter and a first spray thrower arranged on one side of the first belt filter, the oxidation reaction product overflows from the first overflow port on the upper part of the reaction kettle in the reaction unit to a feeding end of the first belt filter in the first rinsing unit, and is rinsed by the first spray thrower to obtain the first rinsed product;
the slurrying unit comprises a slurrying reaction kettle, a chute arranged on the slurrying reaction kettle, and a second discharge pipe, the chute is connected to a discharge end of the belt filter in the first rinsing unit, the first rinsed product enters the slurrying reaction kettle through the chute and undergoes slurrying treatment in the slurrying reaction kettle to obtain the slurried material;
the aging unit comprises an aging reaction kettle and a second feed pipe arranged at the bottom of the aging reaction kettle, as well as a second overflow port arranged on the upper part of the aging reaction kettle, the second feed pipe is connected to the second discharge pipe of the slurrying unit, and the slurried material undergoes the first aging treatment and the second aging treatment in sequence in the aging reaction kettle to obtain the second aged material;
the second rinsing unit comprises a second belt filter and a second spray thrower arranged on one side of the second belt filter, the second aged material overflows to a feeding end of the second belt filter through the second overflow port on the upper part of the aging reaction kettle in the aging unit, and is rinsed by the second spray thrower to obtain the second rinsed product; and
the drying and sintering unit comprises the drying subunit and the sintering subunit, wherein the drying subunit comprises a drying oven, and the sintering subunit comprises a calcination furnace, the second rinsed product is dried through the drying oven to obtain the dried material, and then the dried material is sintered through the calcination furnace to obtain the iron phosphate.

9. The production device of the iron phosphate according to claim 8, wherein the production device comprises at least one of the following features:
(1) the oxidation reaction raw material flows into the reaction kettle in the continuous reaction unit at a flow rate of 1/20 to 1/5 times the volume of the reaction kettle in the continuous reaction unit per minute; and
(2) the slurried material flows into the aging reaction kettle of the aging unit at a flow rate of 1/150 to 1/90 times the volume of the aging reaction kettle per minute.

10. A lithium iron phosphate cathode material, wherein the lithium iron phosphate cathode material is prepared from the iron phosphate according to any one of claims 1 to 3, or the iron phosphate prepared by the preparation method according to any one of claims 4 to 6, or the iron phosphate produced by the production device according to any one of claims 7 to 9.
